# EUROPÄISCHE PATENTANMELDUNG

(11) **EP 0 950 827 A1**
(43) Veröffentlichungstag der Anmeldung: **20.10.1999**
(21) Anmeldenummer: 99102333.4
(22) Anmeldetag: 06.02.1999
(51) Int. Cl.: F16D 25/12

(54) **Nehmerzylinder für eine druckmittelbetätigte Kupplung**

(30) Priorität: 14.04.1998 DE 19816513
(71) Anmelder: Mannesmann Sachs Aktiengesellschaft, 97424 Schweinfurt (DE)
(72) Erfinder: Seufert, Robert, 97714 Oerlenbach (DE); John, Thomas, 97529 Sulzheim (DE)

(57) **Zusammenfassung**

Bei einem Betätigungselement für eine Kupplung sorgt ein mittels einer automatischen Verstelleinrichtung verstellbarer Anschlag (5) dafür, daß der Betätigungshub eines Kolben (2) in Ausrückrichtung der Kupplung auch dann nicht zunimmt, wenn der Kolben (2) sich infolge eines Verschleißes der Kupplungsbelags bei eingerückter Kupplung zunehmend entgegen der Betätigungsrichtung verschiebt.

## Beschreibung

Die Erfindung betrifft ein Betätigungselement für eine druckmittelbetätigte Kupplung, welches in einem Nehmerzylinder einen durch Druckmittelbeaufschlagung verschieblichen Kolben hat, der zur Betätigung eines Kupplungsausrückhebels gegen einen Stößel abgestützt ist.

Ein pneumatisch arbeitendes Betätigungselement der vorstehenden Art ist Gegenstand der EP 0 453 749. Wie bei den in der Praxis gebauten Betätigungselementen für Kupplungen hat der Kolben bei eingerückter Kupplung Abstand von einer rückwärtigen Wand des Nehmergehäuses. Durch den Verschleiß der Kupplungsbeläge wird der Kolben bei eingerückter Kupplung von dem sich auf ihn abstützenden Stößel zunehmend in Richtung dieser rückwärtigen Wand verschoben. Dadurch verschiebt sich der Hubbereich des Kolbens zwischen der Ausrückstellung und Einrückstellung der Kupplung zunehmend entgegen der Betätigungsrichtung. Unerwünscht große Ausrückwege der Kupplung, die zu einem Überdrücken der Kupplungsfeder führen können, werden bei dem bekannten Betätigungselement durch einen Wegsensor am Betätigungselement vermieden, welcher unabhängig vom Verschleiß der Kupplungsbeläge den Betätigungsweg des Kolbens im Mitnehmergehäuse erfasst.

In der Praxis begnügt man sich bei hydraulisch arbeitenden Betätigungselementen nicht mit elektronischen Mitteln zur Begrenzung des Ausrückweges, vielmehr betätigt man den Nehmerzylinder üblicherweise mittels eines Kupplungsgeberzylinders, dessen Kolben gegen einen mechanischen Anschlag bewegbar ist, so daß die maximal in den Nehmerzylinder der Kupplung geförderte Druckmittelmenge begrenzt wird. Ein solcher Geberzylinder ist jedoch relativ teuer, so daß der Wunsch besteht, den Nehmerzylinder unmittelbar von einer Druckmittelquelle über ein Kupplungsventil mit Druckmittel zu beaufschlagen.

Der Erfindung liegt das Problem zugrunde, ein Betätigungselement der eingangs genannten Art derart auszubilden, daß unabhängig von dem ihm zugeführten Druckmittel und ohne elektronischen Aufwand ein Überdrücken der Kupplung ausgeschlossen ist.

Dieses Problem wird erfindungsgemäß dadurch gelöst, daß der maximal mögliche Hub des Kolbens in Ausrückrichtung durch einen kupplungsseitigen Anschlag begrenzt ist und daß der Nehmerzylinder eine automatische Verstelleinrichtung zum Verschieben des Hubbereiches des Stößels in Abhängigkeit vom Verschleiß des Kupplungsbelages und damit des Rückhubes des Stößels beim Einkuppeln hat.

Ein solches Betätigungselement schließt beim Ausrücken der Kupplung einen Hub über den durch den kupplungsseitigen Anschlag begrenzten Weg hinaus aus. Dadurch wird ein Überdrücken der Kupplungsfeder zuverlässig ausgeschlossen. Da sich der Hubbereich des die Kupplung betätigenden Stößels durch die automatische Verstelleinrichtung in Abhängigkeit vom Verschleiß des Kupplungsbelages verschiebt, ergeben sich unabhängig vom Verschleiß stets gleiche, durch den Anschlag begrenzte Ausrückwege. Die automatische Verstelleinrichtung ermöglicht es zugleich, Fertigungstoleranzen vor der ersten Inbetriebnahme der Kupplung auszugleichen.

Durch den zunehmenden Belagverschleiß verschiebt sich der die Kupplung betätigende Stößel in Einrückstellung der Kupplung zunehmend zur Betätigungsseite hin. Üblicher-weise befindet sich zur Ermöglichung dieser Verschiebung der Kolben in dem Nehmerzylinder im eingekuppelten Zustand des Betätigungselementes in einer Zwischenstellung zwischen der Ausrückstellung und einem rückwärtigen Anschlag des Nehmerzylinders. Dadurch kann er sich bei zunehmendem Belagverschleiß zunehmend entgegen der Betätigungsrichtung verschieben. Wenn dann der kupplungsseitige Anschlag seine Position beibehält, wird der maximal mögliche Ausrückweg ständig größer, so daß das Problem eines Überdrückens der Kupplungsfeder trotz des Anschlags auftreten kann. Zur Vermeidung eines solchen Missstandes bei einem Betätigungselement mit einem bei eingerückter Kupplung eine Zwischenstellung einnehmenden Kolben ist es vorteilhaft, wenn gemäß einer Weiterbildung der Erfindung die Verstelleinrichtung zum Verstellen des kuppIungsseitigen Anschlags entgegen der Betätigungsrichtung des Kolbens ausgebildet ist. Hierdurch kann man den Anschlag stets in dem Maße entgegen der Betätigungsrichtung des Betätigungselementes verschieben, Wie sich die Einrückposition der Kupplung verschiebt, so daß der maximal mögliche Hub des Betätigungselementes immer gleich bleibt.

Besonders einfach ist die Verstelleinrichtung ausgebildet, wenn in dem Nehmerzylinder mehrere sägezahnförmige Nuten hintereinander angeordnet sind, indem die aneinandergrenzenden Nuten jeweils in Betätigungsrichtung gesehen eine rechtwinklig in den Nehmerzylinder hineinführende Flanke und entgegensetzt dazu eine flach ansteigende Flanke haben, wenn in einer Nut ein als Sicherungsring ausgebildeter Anschlag für den Kolben sitzt und wenn die Verstelleinrichtung eine axial unverschieblich auf dem Stößel befestigte, beim Einrückhub des Stößels gegen den Anschlag bewegliche Nachstellscheibe hat.

Die Kupplung kann optimal in Abhängigkeit von unterschiedlichen Parametern, insbesondere der Motor- und Getriebedrehzahl arbeiten und unnötig große Ausrückwege vermeiden, wenn der Kolben mit einem Sensormagneten versehen ist und wenn außenseitig auf dem Nehmergehäuse ein auf ein Magnetfeld ansprechender Wegsensor angeordnet ist.

Für eine Ausführungsform mit einem Wegsensor ist es besonders vorteilhaft, wenn der Kolben aus einem gegenüber dem Nehmergehäuse durch eine Dichtung abgedichteten Außenkolben und einem gegenüber dem Außenkolben durch eine zweite Dichtung abgedichteten, den Stößel abstützenden Innenkolben gebildet ist, wobei der Innenkolben und der Außenkolben durch Druckbeaufschlagung des Nehmergehäuses gemeinsam in Ausrückrichtung der Kupplung verschieblich sind und der Außenkolben bei eingerückter Kupplung auf der der Betätigungsrichtung abgewandten Seite gegen einen gehäusefesten Anschlag des Nehmerzylinders anliegt und wenn die Verstelleinrichtung durch eine Ratschenverbindung als eine formschlüssige Verbindung oder aber durch eine reibschlüssige Verbindung des Innenkolbens mit dem Außenkolbens gebildet ist, welche eine Verschiebung des Innenkolbens relativ zum Außenkolben in Einrückrichtung der Kupplung zulässt. Bei einer solchen Ausführungsform verschiebt sich durch den Belagverschleiß nur der Hubbereich des Stößels, nicht aber der Hubbereich des Außenkolbens. Dadurch vergrößert sich für den Wegsensor durch den Belagverschleiß nicht der Weg, den er erfassen muss.

Konstruktiv besonders einfach ist eine Ausführungsform für die formschlüssige Verbindung eines Außenkolbens mit einem Innenkolben gestaltet, wenn die Verstelleinrichtung durch aneinandergrenzende, sägezahnförmige Nuten in dem Außenkolben und eine in jeweils eine der Nuten greifende Sperrklinke in dem Innenkolben gebildet ist.

Ebenso einfach ist eine Ausführung für eine reibschlüssige Verbindung eines Außenkolbens mit einem Innenkolben gestaltet, wenn die Verstelleinrichtung durch Reibung zwischen dem Außen- und dem Innenkolben über ein Reibelement enfolgt, welches mit dem Innenkolben axial verbunden ist und gegen eine zylindrische Innenmantelfläche des Außenkolbens eine Reibung mit einer maximalen Haltekraft erzeugt, die beim Verstellen des Innenkolbens gegenüber dem Außenkolben überschritten wird.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: einen Längsschnitt durch eine erste Ausführungsform eines Betätigungselementes nach der Erfindung,
- Fig.2: einen Längsschnitt durch eine obere Hälfte einer zweiten Ausführungsform eines Betätigungselementes nach der Erfindung,
- Fig. 3: einen Längsschnit durch eine obere Hälfte einer dritten Ausführungsform eines Betätigungselementes gemäß der Erfindung.

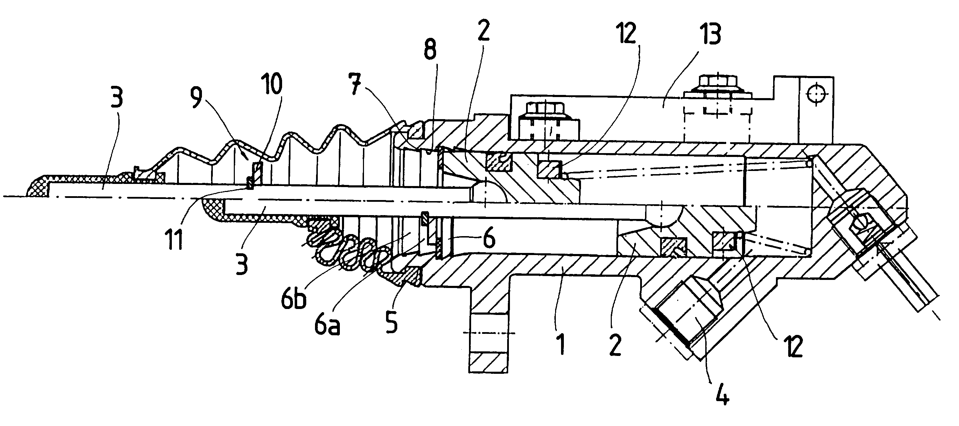

Das in Figur 1 gezeigte Betätigungselement hat einen Nehmerzylinder 1, in welchem ein Kolben 2 verschieblich angeordnet ist. Dieser Kolben 2 liegt gegen einen Stößel 3 an, mit dem ein nicht gezeigter Kupplungsausrückhebel betätigbar ist. In der unteren Bildhälfte wurden der Kolben 2 und der Stößel 3 in der sich bei eingerückter Kupplung ergebenden Stellung gezeigt, während diese Bauteile in der oberen Bildhälfte in der sich bei ausgerückter Kupplung ergebenden Stellung dargestellt wurden. Zur Druckbeaufschlagung hat der Nehmerzylinder 1 einen Hydraulikanschluss 4, über welchen er mit einem nicht gezeigten Kupplungsventil verbindbar ist. Ein Geberzylinder wird bei dem erfindungsgemäßen Betätigungselement unnötig.

Wichtig für die Erfindung ist ein durch einen Sicherungsring gebildeter Anschlag 5, gegen welchen der Kolben 2 anliegt, wenn er sich in Ausrückstellung der Kupplung maximal verschoben hat. Dieser Anschlag 5 sitzt in einer von drei hintereinander angeordneten Nuten 6, 6a, 6b. Diese Nuten 6, 6a, 6b haben jeweils zur Seite der Kupplung hin eine rechtwinklig in den Nehmerzylinder 1 hineinführende Flanke 7 und eine Flanke 8, welche entgegen der Betätigungsrichtung sanft ansteigt. Durch diese Gestaltung kann der Anschlag 5 zunächst in die in Figur 1 gesehen am weitesten links liegende Nut 6b eingesetzt werden und sich bei Belagverschleiß zunächst in die Nut 6a und bei weiterem Verschleiß des Belages der Kupplung in die Nut 5 verschieben. Diese Verschiebung erfolgt automatisch durch eine Verstelleinrichtung 9, welche durch eine Nachstellscheibe 10 gebildet ist, die durch einen Sicherungsring 11 zur Seite der Kupplung hin unverschiebbar auf dem Stößel 3 gehalten ist.

Bei noch neuen Kupplungsbelägen wird der Anschlag 5 zunächst in die kupplungsseitige Nut 6b eingesetzt. Die Nachstellscheibe 10 hat einen solchen Abstand von diesem Anschlag 5, daß sie ihn bei ausgerückter Kupplung nicht berührt. Durch den Verschleiß des Kupplungsbelags verschiebt sich der Kolben 2 bei eingerückter Kupplung zunehmend in Figur 1 gesehen nach rechts. Bei entsprechend großem Belagverschleiß gelangt bei der Rückbewegung des Stößels 3 die Nachstellscheibe 10 gegen den Anschlag 5 und verschiebt ihn in die nächsffolgende Nut 6a, so daß der Weg des Kolbens 2 in Ausrückrichtung früher begrenzt wird als zuvor.

Zur Erfassung der Verschiebung des Kolbens 2 hat dieser einen Sensormagneten 12, dessen magnetisches Feld von einem Wegsensor 13 erfasst wird.

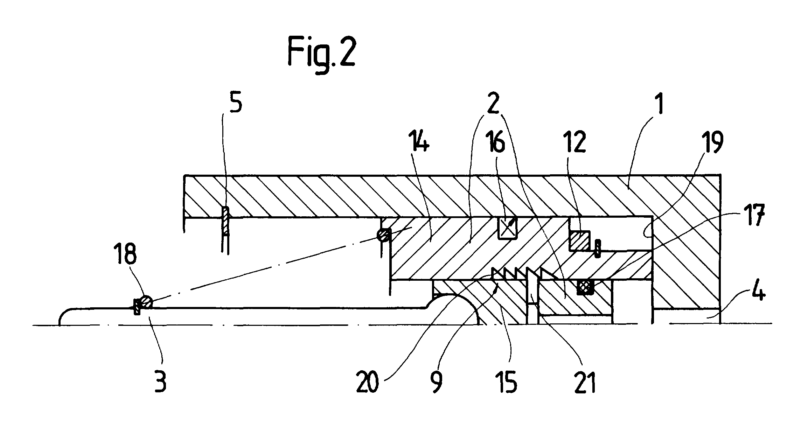

Bei der Ausführungsform nach Figur 2 besteht der Kolben 2 aus einem Außenkolben 14 und einem Innenkolben 15 geringeren Querschnitts. Der Außenkolben 14 ist mittels einer Dichtung 16 gegenüber dem Nehmerzylinder 1 abgedichtet, während der Innenkolben 15 mittels einer Dichtung 17 gegenüber dem Außenkolben 14 abgedichtet ist. Der Stößel 3 stützt sich ausschließlich im Innenkolben 15 ab. Wie in der Figur 2 zu erkennen ist, wird der Außenkolben 14 durch eine sich am Stößel 3 und dem Außenkolben 14 abstützende Druckfeder 18 gegen einen rückwärtigen Anschlag 19, welcher durch die rückwärtige Stirnwand des Nehmerzylinders 1 gebildet ist, vorgespannt. In Betätigungsrichtung ist der Hub des Außenkolbens 14 durch den Anschlag 5 begrenzt.

Der Außenkolben 14 hat in seiner Innenmantelfläche als Teil der Verstelleinrichtung 9 mehrere sägezahnförmige, aufeinanderfolgende Nuten 20. In eine der Nuten 20 greift eine Sperrklinke 21 des Innenkolbens 15.

Bei neuen Kupplungsbelägen greift die Sperrklinke 21 zunächst in die am weitesten links liegende Nut 20. Führt der Stößel 3 infolge Belagverschleiß einen vergrößerten Rückhub aus, dann vermag sich nach Anlage des Außenkolbens 14 gegen den Anschlag 19 der Innenkolben 1 5 mit dem Stößel 3 weiter nach rechts, also entgegengesetzt der Betätigungsrichtung der Kupplung zu verschieben, so daß die Sperrklinke 21 in eine weiter rechts liegende Nut 20 zu gelangen vermag.

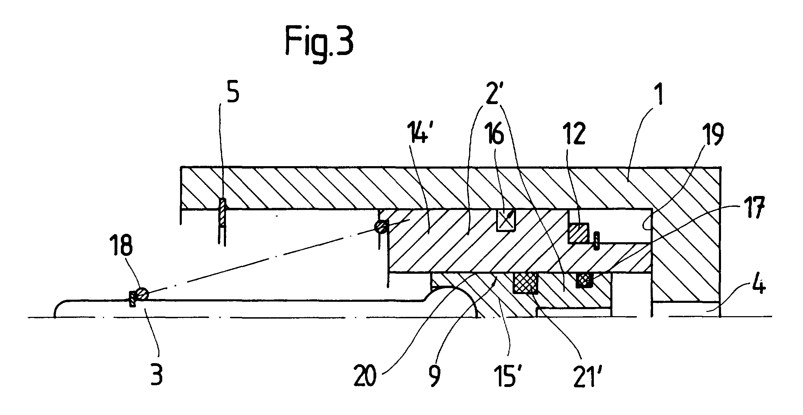

Bei der Ausführungsform nach Figur 3 besteht ein Kolben 2' aus einem Außenkolben 14' und einem Innenkolben 15' geringeren Querschnitts. Der Außenkolben 14' ist mittels einer Dichtung 16 gegenüber dem Nehmerzylinder 1 abgedichtet, während der Innenkolben 15' mittels einer Dichtung 17 gegenüber dem Außenkolben 14' abgedichtet ist. Der Stößel 3 stützt sich ausschließlich im Innenkolben 15' ab. Wie in der Figur 3 zu erkennen ist, wird der Außenkolben 14' durch eine sich am Stößel 3 und dem Außenkolben 14' abstützende Druckfeder 18 gegen einen rückwärtigen Anschlag 19, welcher durch die rückwärtige Stirnwand des Nehmerzylinders 1 gebildet ist, vorgespannt. In Betätigungsrichtung ist der Hub des Außenkolbens 14' durch den Anschlag 5 begrenzt. Der Innenkolben 15' weist ein Klemmelement 21' auf, das in axialer Richtung fest mit dem Innenkolben 15' verbunden ist und sich gegen die zylindrische Innenmantelfläche des Außenkolbens 14' anpreßt, wodurch eine relative Verschiebung des Außenkol-bens 14' gegen den Innenkolben 15' erst nach Überwindung einer Sollhaltekraft möglich ist.

Bei neuen Kupplungsbelägen hält das Klemmelement 21' den Innenkolben 15' gemäß Fig. 3 am weitesten links im Außenkolben 14'.

Führt der Stößel 3 infolge Belagverschleiß einen vergrößerten Rückhub aus, dann vermag sich nach Anlage des Außenkolbens 14' gegen den Anschlag 19 der Innenkolben 15' mit dem Stößel 3 weiter nach rechts, also entgegengesetzt der Betätigungsrichtung der Kupplung zu verschieben, so daß das Klemmelement 21' nach weiter rechts verschoben wird.

Der Sensormagnet 12 ist bei der Ausführungsform nach Figur 2 am Außenkolben 14 angebracht. Da der Außenkolben beim Einkuppeln stets gegen den Anschlag 19 gelangt, bewegt sich der Außenkolben 14 bei der Kupplungsbetätigung stets in einem gleichen Bereich, so dass der in Figur 2 nicht dargestellte Wegsensor 13 besonders kurz ausgebildet werden kann.

## Patentansprüche

1. Betätigungselement für eine druckmittelbetätigte Kupplung, welches in einem Nehmerzylinder einen durch Druckmittelbeaufschlagung verschieblichen Kolben hat, der zur Betätigung eines Kupplungsausrückhebels gegen einen Stößel abgestützt ist,
**dadurch gekennzeichnet,**
daß der maximal mögliche Hub des Kolbens (2) in Ausrückrichtung durch einen kupplungsseitigen Anschlag (5) begrenzt ist und daß der Nehmerzylinder (1) eine automatische Verstelleinrichtung (9) zum Verschieben des Hubbereiches des Stößels (3) in Abhängigkeit vom Verschleiß des Kupplungsbelages und damit des Rückhubes des Stößels (3) beim Einkuppeln hat.

2. Betätigungselement nach Anspruch 1, bei dem der Kolben in dem Nehmerzylinder (1) im eingekuppelten Zustand der Kupplung sich in einer Zwischenstellung zwischen der Ausrückstellung und einem rückwärtigen Anschlag des Nehmerzylinders (1) befindet,
**dadurch gekennzeichnet,**
daß die Verstelleinrichtung (9) zum Verstellen des kupplungsseitigen Anschlags (5) entgegen der Betätigungsrichtung des Kolbens (2) ausgebildet ist.

3. Betätigungselement nach Anspruch 2,
**dadurch gekennzeichnet,**
daß in dem Nehmerzylinder (1) mehrere sägezahnförmige Nuten (6, 6a, 6b) hintereinander angeordnet sind, indem die aneinandergrenzenden Nuten (6, 6a, 6b) jeweils in Betätigungsrichtung gesehen eine rechtwinklig in den Nehmerzylinder (1) hineinführende Flanke (7) und entgegengesetzt dazu eine flach ansteigende Flanke (8) haben, daß in einer Nut (6) ein als Sicherungsring ausgebildeter Anschlag (5) für den Kolben (2) sitzt und daß die Verstelleinrichtung (9) eine axial unverschieblich auf dem Stößel (3) befestigte, beim Einrückhub des Stößels (3) gegen den Anschlag (5) bewegliche Nachstellscheibe (10) hat.

4. Betätigungselement nach zumindest einem der vorangehenden Ansprüche,
**dadurch gekennzeichnet,**
daß der Kolben (2) mit einem Sensormagneten (12) versehen ist und daß außenseitig auf dem Nehmerzylinder (1) ein auf ein Magnetfeld ansprechender Wegsensor (13) angeordnet ist.

5. Betätigungselement nach Anspruch 1 oder 4,
**dadurch gekennzeichnet,**
daß der Kolben (2) aus einem gegenüber dem Nehmergehäuse (1) durch eine Dichtung (16) abgedichteten Außenkolben (14) und einem gegenüber dem Außenkolben (14) durch eine zweite Dichtung (17) abgedichteten, den Stößel (3) abstützenden Innenkolben (15) gebildet ist, wobei der Innenkolben (15) und der Außenkolben (14) durch Druckbeaufschlagung des Nehmerzylinders (1) gemeinsam in Ausrückrichtung der Kupplung verschieblich sind und der Außenkolben (14) bei eingerückter Kupplung auf der der Betätigungsrichtung abgewandten Seite gegen einen gehäusefesten Anschlag (19) des Nehmerzylinders (1) anliegt und daß die Verstelleinrichtung (9) durch eine Ratschenverbindung des Innenkolbens (15) mit dem Außenkolbens (14) gebildet ist, welche eine Verschiebung des Innenkolbens (15) relativ zum Außenkolben (14) in Einrückrichtung der Kupplung zulässt.

6. Betätigungselement nach Anspruch 5,
**dadurch gekennzeichnet,**
daß die Verstelleinrichtung (9) durch aneinandergrenzende sägezahnförmige Nuten (20) in dem Außenkolben (14) und eine in jeweils eine der Nuten (20) greifende Sperrklinke (21) in dem Innenkolben (15) gebildet ist.

7. Betätigungselement nach einem der Ansprüche 1 bis 6,
**dadurch gekennzeichnet,**
daß die Verstelleinrichtung (9) durch ein Klemmelement (21') gebildet ist, das axial fest mit einem Innenkolben (15') verbunden ist und durch federnde Aufspreizung gegen eine Innenmantelfläche eines Außenkolbens (14') durch Reibschluß eine Sollhaltekraft gegen eine relative Verschiebung des Innenkolbens (15') gegen den Außenkolben (14') bewirkt.
